# EUROPEAN PATENT APPLICATION

(11) **EP 2 798 985 A1**
(43) Date of publication of application: **05.11.2014**
(21) Application number: 13165831.2
(22) Date of filing: 29.04.2013
(51) Int. Cl.: A47J 31/18, A47J 31/20

(54) **Press pot**

(71) Applicant: FRED ApS, 2920 Charlottenlund (DK)
(72) Inventor: Dreyer-Nielsen, Frederik Foged, 2920 Charlottenlund (DK); Pedersen, Troels, 2990 Nivå (DK)
(74) Representative: Hoffmann Dragsted A/S

(57) **Abstract**

Press pot (1) for brewing beverages, comprising:- a container (9) for containing a fluid (12), and - a plunger device (2) for being inserted into the container, the plunger device comprising a piston filter element (3) for filtering out a substance (11) suspended in the fluid, and a piston rod (5) extending from the piston filter element and adapted to move the piston filer element through the fluid, wherein the plunger device further comprises:- a retrieval piston element (4) for removing the substance (11) filtered from the fluid from the container, and - a connection mechanism (6) for releasably connecting the retrieval piston element with the piston rod whereby the retrieval piston element may be independently inserted into the container and subsequently connected with the piston rod to retrieve the retrieval piston element from the container.Furthermore, the present invention relates to a plunger device (2) for being inserted into a container (9).

## Description

### Field of the invention

The present invention relates to a press pot for brewing beverages, comprising a container for containing a fluid, and a plunger device for being inserted into the container of such press pot.

### Background art

A press pot, also known as a coffee plunger or a French press, is a widely used device for making coffee, tea or other beverages by mixing a fluid with a substance such as grinded coffee, tea leaves or other ingredients. In use the substance is provided in the bottom of the pot, whereupon a fluid is poured into the pot and mixed with the substance. When the substance has been suspended in the fluid for a certain amount of time, the substance has to be separated from the fluid to provide a drinkable fluid. This is done by inserting a plunger comprising a filter into the pot and by subsequently pushing the plunger whereby the filter is pressed down through the fluid. Hereby the substance, such as grinded coffee or tea leaves, is filtered from the fluid. When the plunger has been pushed all the way down, the wetted substance, also known as grounds, is separated from the fluid and collected in a lower section of the pot below the filter.

When cleaning a traditional press pot, the wetted grounds has to be removed from the bottom of the pot. In known press pots this operation is cumbersome due to the nature of the grounds, and may for example require the use of additional tools or great amounts of water which is not very environmentally friendly. Further, if especially the coffee grounds are flushed into a sink, this may result in the drain of the sink clogging.

### Summary of the invention

It is an object of the present invention to wholly or partly overcome the above disadvantages and drawbacks of the prior art. More specifically, it is an object to provide an improved press pot that is easy to clean and wherein grounds may be removed in a more effective way.

The above objects, together with numerous other objects, advantages, and features, which will become evident from the below description, are accomplished by a solution in accordance with the present invention by a press pot for brewing beverages, comprising:
- a container for containing a fluid, and
- a plunger device for being inserted into the container, the plunger device comprising a piston filter element for filtering out a substance suspended in the fluid, and a piston rod extending from the piston filter element and adapted to move the piston filer element through the fluid,
wherein the plunger device further comprises:
- a retrieval piston element for removing the substance filtered from the fluid from the container, and
- a connection mechanism for releasably connecting the retrieval piston element with the piston rod whereby the retrieval piston element may be independently inserted into the container and subsequently connected with the piston rod to retrieve the retrieval piston element from the container.

Hereby a filtered out substance may be removed in an effective way, and the press pot may be easily cleaned by retrieving the filtered out substance and collected between the retrieval piston element and the piston filter element and discarding it directly into e.g. the bin. In this way the use of large amounts of water for cleaning the press pot may be avoided, and clogging of drains due to built up of grounds may be prevented.

Press pot wherein the retrieval position element is positioned below the piston filter element.

Press pot wherein the retrieval piston element is provided at one extremity of the piston rod and the piston filter element is positioned at a position along the piston rod between the retrieval piston element and another extremity of the piston rod.

In an embodiment, the connection mechanism may be arranged between the filter piston and the retrieval piston.

Also, the connection mechanism may be a snap-fit mechanism comprising a male part adapted to enter into engagement with a mating female part to releasably connect the retrieval piston element with the piston rod.

Said snap-fit mechanism may be a cylindrical snap-fit joint comprising a cylindrical male part adapted to enter into engagement with a mating groove provided in a female part.

Moreover, connection mechanism may be a snap-fit joint of the ball and socket type comprising a ball part adapted to enter into engagement with a mating socket part to releasably connect the retrieval piston element with the piston rod.

Further, the cylindrical male part may comprise a plurality of exterior recesses adapted to enter into engagement with a circumferential protrusion provided on an interior wall of the mating groove of the female part, whereby a distance between the piston filter element and the retrieval piston may be varied when the retrieval piston is connected with the piston rod.

Additionally, the male part may extend from the retrieval piston element.

By the male part extending from the retrieval piston element, the risk that the substance to be suspended, such as grinded coffee, tea leaves or the like, will interfere with the connection mechanism is reduced.

In an embodiment, the female part may extend from the retrieval piston element.

Also, the connection mechanism may be positioned substantially in the centre of the plunger device.

Moreover, the retrieval piston element may comprise a plate element for collecting the substance filtered from the fluid.

By the plate element being substantially plane without a cavity for containing the filtered out substance, the filtered out substance may be easily removed from between the retrieval piston element and the piston filter element when retrieved from the container. When the plunger device containing the filtered out substance has been removed from the container, the filtered out substance may be discharged directly into a bin by shaking the plunger device over the bin or by simply knocking the plunger device against the side of the bin.

In an embodiment, the plate element may comprise an indentation for keeping the substance filtered from the fluid on the plate element.

By providing an indentation in the plate element, the filtered out substance is better maintained on the retrieval piston element while at the same time the filtered out substance may be easily removed.

Furthermore, the plate element may comprise through holes for allowing fluid to pass through the plate element to prevent the creation of a vacuum below the retrieval piston element.

Also, the retrieval piston element may comprise a circumferential edge element adapted to seal against an inside wall of the container.

Said edge element may be a flexible edge element made from a rubbery material.

In one embodiment, the retrieval piston element may be a disposable element designed for single use only.

Furthermore, the plate element may be manufactured from a biodegradable material.

In addition, the container is a double-walled insulating container.

The present invention further relates to a plunger device for being inserted into a container, the plunger device comprising:
- a piston filter element for filtering out a substance suspended in a fluid and a piston rod extending from the piston filter element and adapted to move the piston filer element through the fluid,
wherein the plunger device further comprises
- a retrieval piston element for removing the substance filtered from the fluid, from the container, the retrieval piston element being operably connected with the piston rod to retrieve the retrieval piston element from the container.

The plunger device as described above may further comprise a connection mechanism for releasably connecting the retrieval piston element with the piston rod, and the retrieval piston element may be adapted to be independently inserted into the container whereby the retrieval piston element may subsequently be connected with the piston rod while the retrieval piston element is positioned inside the container.

### Brief description of the drawings

The invention and its many advantages will be described in more detail below with reference to the accompanying schematic drawings, which for the purpose of illustration show some non-limiting embodiments and in which
Fig. 1 shows a cross-section of a press pot comprising a plunger device according to one embodiment of the invention,
Fig. 2 shows a plunger device,
Fig. 3 shows the plunger device with a disengaged retrieval piston element,
Fig. 4 shows a cross-section of a plunger device,
Figs. 5a-5b show the plunger device with the snap connection in two different positions,
Fig. 6 shows a cross-section of one embodiment of a retrieval piston element,
Fig. 7 shows another embodiment of a plunger device,
Figs. 8a-8d show the use of a press pot comprising a plunger device according to one embodiment of the invention, and
Fig. 9 shows another embodiment of the plunger device with the snap connection.

All the figures are highly schematic and not necessarily to scale, and they show only those parts which are necessary in order to elucidate the invention, other parts being omitted or merely suggested.

### Detailed description of the invention

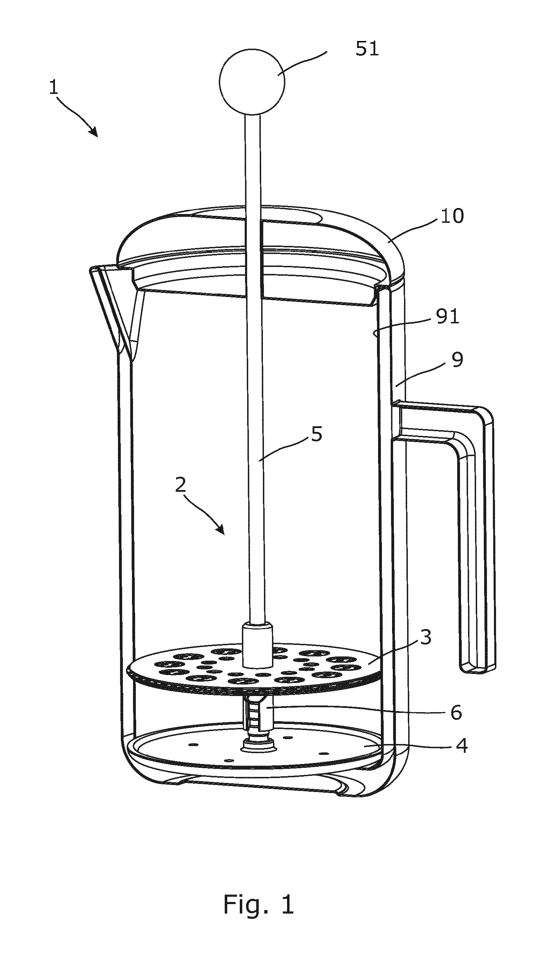

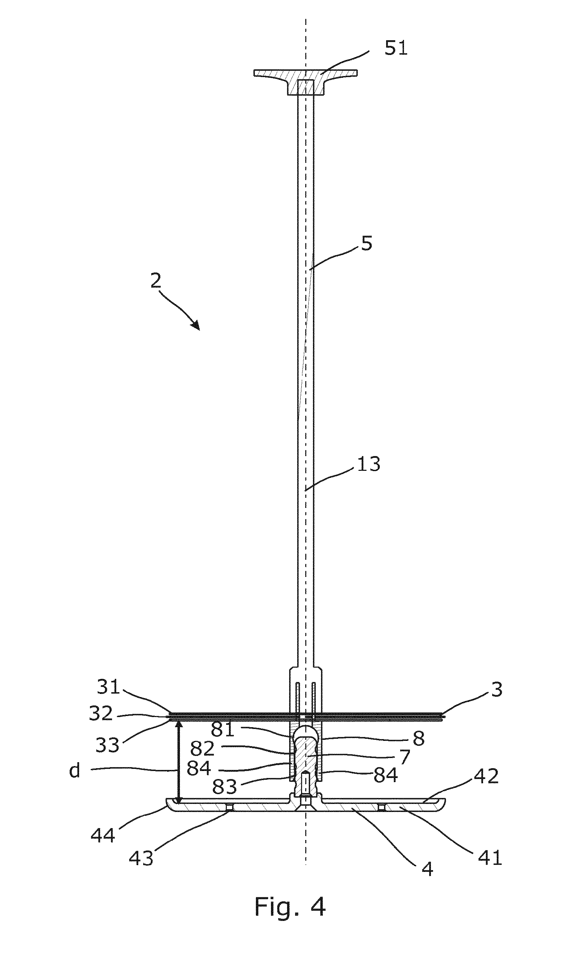

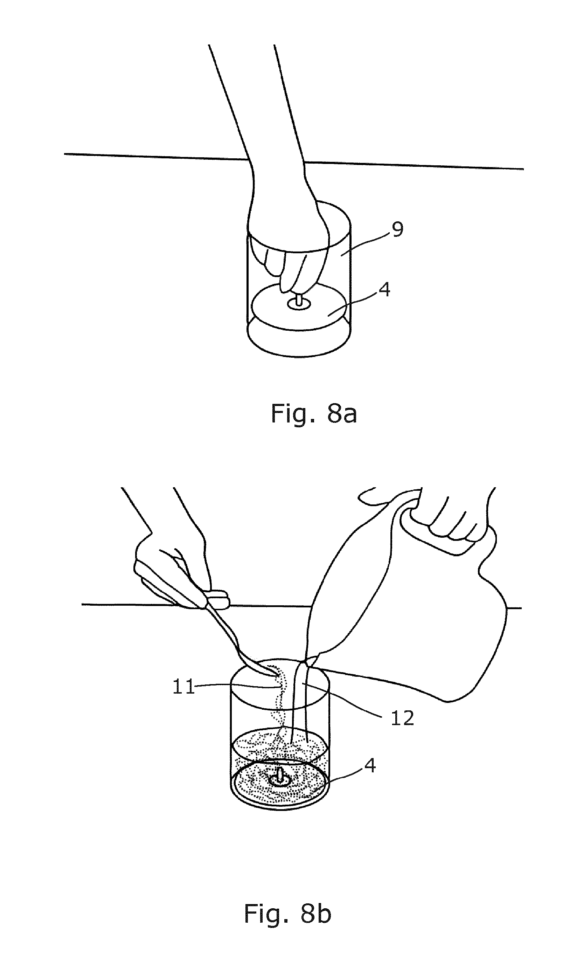

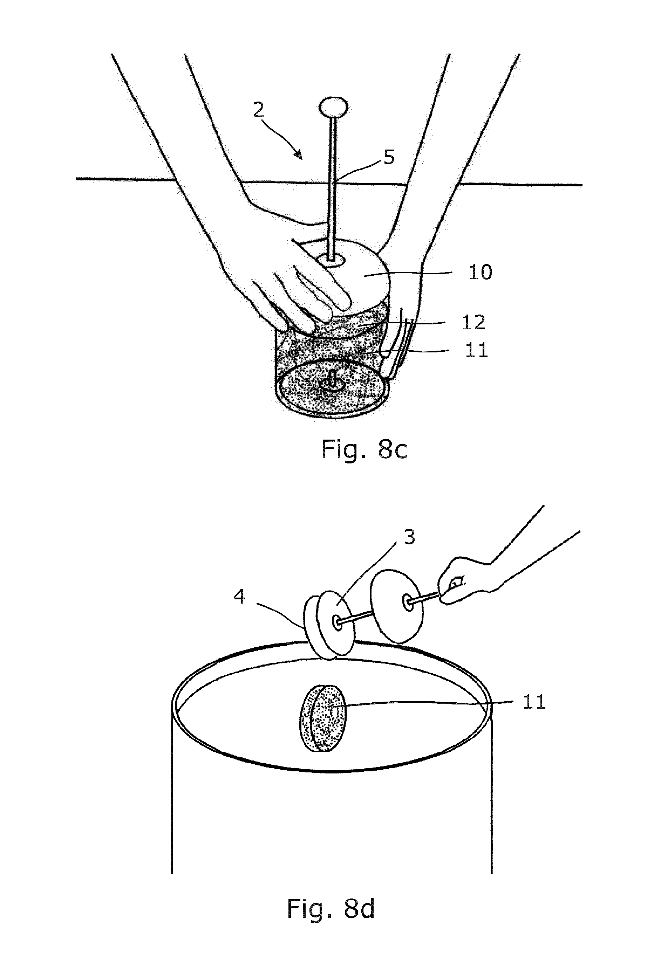

Fig. 1 shows a press pot 1 for brewing beverages, such as coffee and tea. The press pot comprises a container 9 wherein a fluid 12 may be contained and mixed with a substance 11 (shown in Fig. 8b), such as grinded coffee or tea leaves. The container 9 may be of varying design and may for example be a double-walled insulating container as shown in Fig. 1, but is not limited hereto. The container 9 may also for example be a traditional glassware container frequently used for press pots. The press pot further comprises a plunger device 2 adapted to be inserted into the container as shown in Fig. 1. The plunger device comprises a piston rod 5, a piston filter element 3 movable by the piston rod 5, and a retrieval piston element 4 provided at one extremity of the piston rod 5 below the piston filter element as shown in Fig. 4. The piston rod 5 extends through a lid 10 and along a centre axis 13 of the press pot 1 (shown in Fig. 4). At another extremity the piston rod 5 is provided with a knob 51 adapted to facilitate operation of the piston rod.

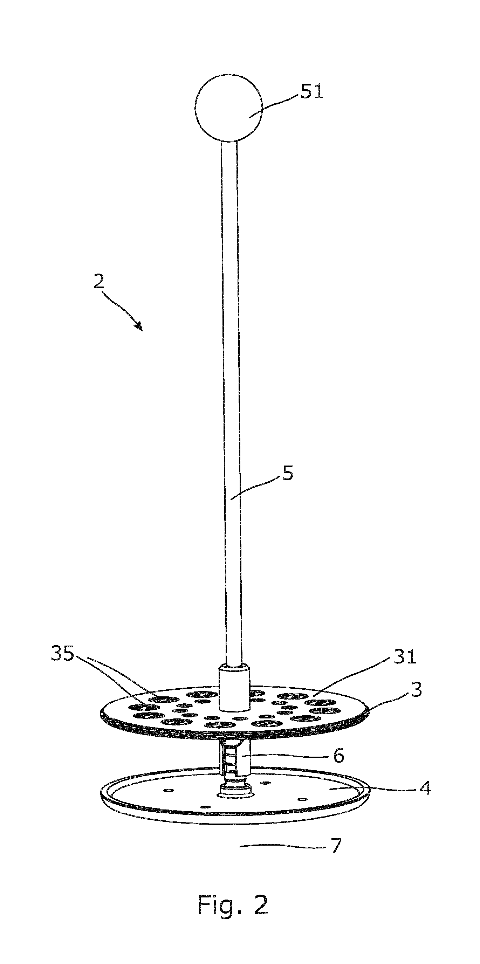

The piston filter element is provided at a distance d from the retrieval piston element 4 and encircles the piston rod 5. As best seen from Fig. 4, the piston filter element 3 comprises a filter element 32 arranged between an upper retainer element 31 and a lower retainer element 33. The two retainer elements are provided with though holes 35 as best seen in Fig. 2, whereby fluid may pass through the piston filter element 3. Even though only one embodiment of a piston filter element 3 is shown, the piston filter element may be constructed in a number of other ways envisaged by the skilled person without departing from the scope of the present invention.

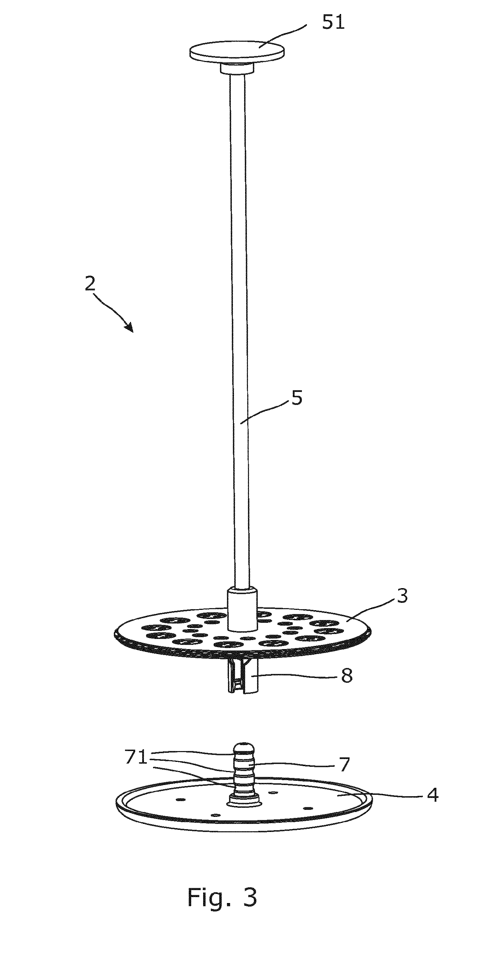

The press pot further comprises a connection mechanism 6 for releasably connecting the retrieval piston element with the piston rod 5. The connection mechanism 6 shown in the figures is a cylindrical snap-fit mechanism 6 comprising a cylindrical male part 7 adapted to enter into engagement with a mating groove 81 provided in a female part 8. The male part 7 and the female part 8 are positioned substantially in the centre of the plunger device extending along the centre axis 13. The male part 7 extends from the retrieval piston element towards the piston filter element 3 for engagement with the female part 8. As shown in Fig. 3, the cylindrical male part 7 comprises a plurality of exterior recesses 71 adapted to enter into engagement with a circumferential protrusion 83 provided on an interior wall 82 of the mating groove 81 of the female part 8 as shown in Fig. 4. The mating groove 81 intersects the female part 8, thereby creating two opposite wall elements 84. The wall elements 84 have a certain flexibility allowing the cylindrical male part 7 to enter the mating groove 81 and the circumferential protrusion 83 to enter into engagement with one of the recesses 71 of the male part 7. Thus when the male part 7 is forced into the mating groove 81, the wall elements bend outwards to a certain degree to allow the circumferential protrusion 83 to enter into engagement with one of the recesses 71. By having wall elements 84 with a certain flexibility, a better fit between the male 7 part and the female part 8 is obtained and the connection between the retrieval piston element 4 and the piston rod 5 is improved.

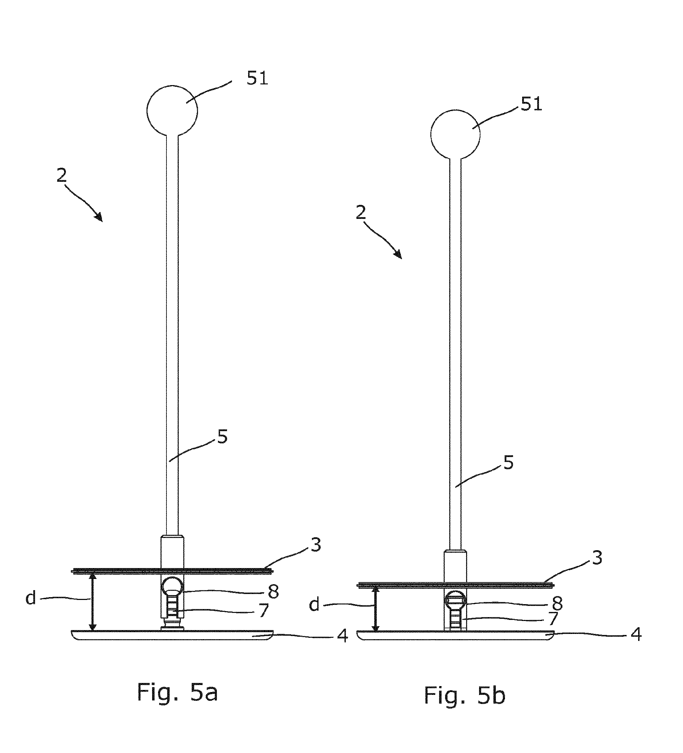

The circumferential protrusion 83 may enter into engagement with any of the plurality of recesses 71 of the male part, whereby the retrieval piston may be connected with the piston rod with various distances between the piston filter element and the retrieval piston element as shown in Figs. 5a and 5b. Fig. 5a shows how the circumferential protrusion 83 enters into engagement with a recess 71 of the male part arranged further above the retrieval piston element 4 compared to Fig. 5b, wherein the circumferential protrusion 83 enters into engagement with a recess 71 of the male part arranged closer to the retrieval piston element.

The retrieval piston element comprises a plate element 41 having an indentation 42 as shown in Fig. 4, for keeping the substance filtered from the fluid on the plate element. However, the plate element may also be provided without such indentation or with a deeper indentation capable of containing more of the filtered out substance. The plate element 41 comprises through holes 43 through which fluid may pass to prevent the creation of a vacuum below the retrieval piston element when the retrieval position element is removed from the container. A circumferential edge 44 of the plate element 41 may also be rounded off as shown in Fig. 4 to facilitate insertion of the retrieval piston element into the container and to accommodate the inside shape of the container.

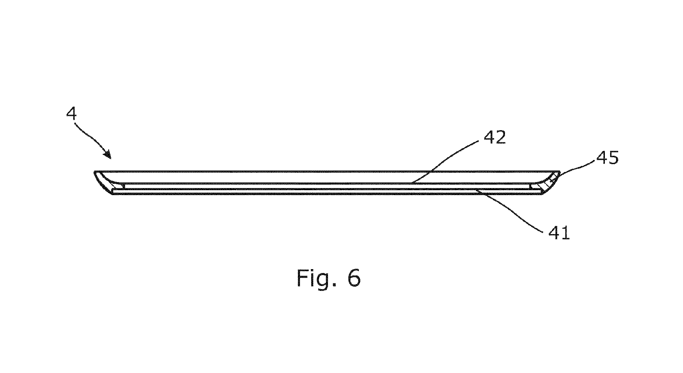

Fig. 6 shows another embodiment of a retrieval piston element 4 comprising a plate element 41 and a circumferential edge element 45 extending in an outwards and upwards direction from the circumference of the plate element 41, thereby providing an indentation 42 with a functionality similar to that of the indentation described above. In one embodiment, the edge element 45 may be a sealing element adapted to seal against an inside wall 91 of the container shown in Fig. 1. The edge element 45 may thus be made from a rubbery material or other resilient material such as silicone.

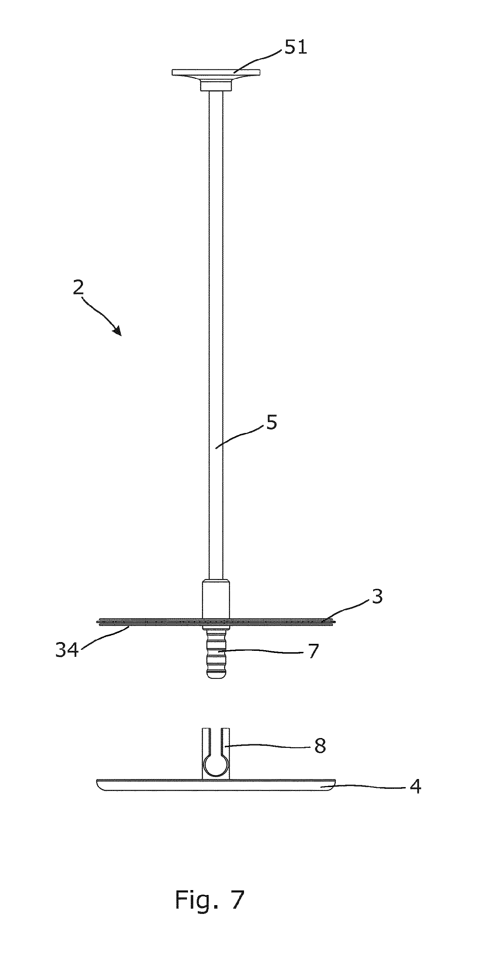

In Fig. 7, another embodiment of the plunger device 2 is shown. In this embodiment, the female part 8 extends from the retrieval piston element and the male part extends from a leading side 34 of the piston filter element.

In the following, the use of the press pot 1 and the plunger device 2 is explained in further detail with reference to the figures, especially Figs. 8a-8d illustrating how the press pot 1 and the plunger device 2 are operated.

Before filling the container 9, the retrieval piston element 4 is inserted into the container and placed at the bottom of the container as shown in Fig. 8a. Subsequently a fluid 12, such as water and a substance 11, such as grinded coffee or tea leaves are poured into the container 9 on top of the retrieval piston element 4 as shown in Fig. 8b. The substance 11 is now suspended in the fluid 12 in the container 9, and the mixture may be left to brew or infuse for a certain period of time. Subsequently the piston filter element 3 is inserted into the container and pushed through the fluid by pushing on the piston rod 5, thereby separating the substance 11 from fluid. As the piston filter element 3 moves through the fluid 12, the substance 11 is filtered from the fluid to provide a fluid or filtrate 12 substantially free from the suspended substance 11. The filtered out substance 11 is collected on the leading side 34 of the piston filter element and forced towards the bottom of the container 9. When the piston filter element 3 and the piston rod 5 are closing in on the retrieval piston element 4, the male part 7 and the female part 8 of the connection mechanism 6 enter into engagement to operably connect the retrieval piston element 4 with the piston rod 5. Depending on the amount of substance poured into the container, the resulting distance between the retrieval piston element 4 and the piston filter element 3 may vary as described in further detail above. As the retrieval piston element 4 is connected with the piston rod 5 via the connection mechanism 6, the filtered out substance 11 is collected between the retrieval piston element 4 and the piston filter element 3.

To remove the filtered out substance 11 from the bottom of the container, e.g. when the press pot has to be cleaned and reused, the piston rod is pulled to remove the retrieval piston element 4 and the piston filter 3 from the container as shown in Fig. 8d. Hereby the filtered out substance 11 collected between the two are easily removed from the container without the need for additional tools or large amounts of water. When the plunger device containing the filtered out substance has been removed from the container, the filtered out substance may be discharged directly into a bin e.g. by shaking the plunger device over the bin or by simply knocking the plunger device against the side of the bin as shown in Fig. 8d. The filtered out substance is thus easily removed from the container and disposed of, thereby greatly reducing the need for rinsing or cleaning the container and the plunger device.

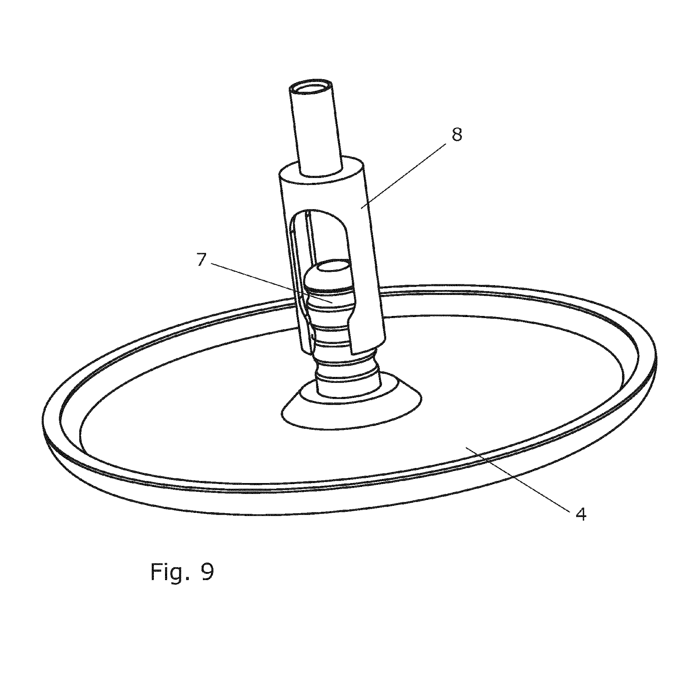

Fig. 9 shows a plunger device in which a female part 8 extending from the piston rod is connecting with a male part 7 extending from the retrieval piston element 4. In Fig. 9, the female part 8 has a different design than that shown in Fig. 5b. In Fig. 9, the female part 8 has a longer mating groove so that the wall elements have a greater flexibility, allowing the cylindrical male part 7 to enter the mating groove and the circumferential protrusion 83 to enter into engagement with one of the recesses of the male part 7. Thus when the male part 7 is forced into the mating groove, the wall elements are able to bend more outwards without being permanently deformed.

Although the invention has been described in the above in connection with preferred embodiments of the invention, it will be evident for a person skilled in the art that several modifications are conceivable without departing from the invention as defined by the following claims.

## Claims

1. Press pot (1) for brewing beverages, comprising:
- a container (9) for containing a fluid (12), and
- a plunger device (2) for being inserted into the container, the plunger device comprising a piston filter element (3) for filtering out a substance (11) suspended in the fluid, and a piston rod (5) extending from the piston filter element and adapted to move the piston filer element through the fluid,
wherein the plunger device further comprises:
- a retrieval piston element (4) for removing the substance (11) filtered from the fluid from the container, and
- a connection mechanism (6) for releasably connecting the retrieval piston element with the piston rod whereby the retrieval piston element may be independently inserted into the container and subsequently connected with the piston rod to retrieve the retrieval piston element from the container.

2. Press pot according to claim 1, wherein the connection mechanism is arranged between the filter piston and the retrieval piston.

3. Press pot according to claim 1 or 2, wherein the connection mechanism is a snap-fit mechanism (6) comprising a male part (7) adapted to enter into engagement with a mating female part (8) to releasably connect the retrieval piston element with the piston rod.

4. Press pot according to claim 3, wherein the snap-fit mechanism is a cylindrical snap-fit joint comprising a cylindrical male part (7) adapted to enter into engagement with a mating groove (81) provided in a female part (8).

5. Press pot according to claim 4, wherein the cylindrical male part (7) comprises a plurality of exterior recesses (71) adapted to enter into engagement with a circumferential protrusion (83) provided on an interior wall (82) of the mating groove of the female part, whereby a distance (d) between the piston filter element and the retrieval piston may be varied when the retrieval piston is connected with the piston rod.

6. Press pot according to any of the claims 3-5, wherein the male part extends from the retrieval piston element.

7. Press pot according to any of the previous claims, wherein the connection mechanism is positioned substantially in the centre (13) of the plunger device.

8. Press pot according to any of the previous claims wherein the retrieval piston element comprises a plate element (41) for collecting the substance filtered from the fluid.

9. Press pot according to claim 8 wherein the plate element comprises an indentation (42) for keeping the substance filtered from the fluid on the plate element.

10. Press pot according to claim 8 or 9, wherein the plate element comprises through holes (43) for allowing fluid to pass through the plate element to prevent the creation of a vacuum below the retrieval piston element.

11. Press pot according to any of the previous claims wherein the retrieval piston element comprises a circumferential edge element (45) adapted to seal against an inside wall (91) of the container.

12. A plunger device (2) for being inserted into a container (9), the plunger device comprising:
- a piston filter element (3) for filtering out a substance (11) suspended in a fluid (12), and a piston rod (5) extending from the piston filter element and adapted to move the piston filer element through the fluid,
wherein the plunger device further comprises
- a retrieval piston element (4) for removing the substance filtered from the fluid, from the container, the retrieval piston element being operably connected with the piston rod to retrieve the retrieval piston element from the container.

13. A plunger device according to claim 12, further comprising a connection mechanism (6) for releasably connecting the retrieval piston element with the piston rod, and wherein the retrieval piston element is adapted to be independently inserted into the container whereby the retrieval piston element may subsequently be connected with the piston rod while the retrieval piston element is positioned inside the container.
